# EUROPÄISCHE PATENTANMELDUNG

(11) **EP 3 144 092 A1**
(43) Veröffentlichungstag der Anmeldung: **22.03.2017**
(21) Anmeldenummer: 16180392.9
(22) Anmeldetag: 20.07.2016
(51) Int. Cl.: B23K 9/32

(54) **STROMANSCHLUSSSTÜCK ZUM KONTAKTIEREN VON ZU SCHWEISSENDEN WERKSTÜCKEN**

(30) Priorität: 16.09.2015 DE 202015104904 U
(71) Anmelder: Dinse G.m.b.H., 22419 Hamburg (DE)
(72) Erfinder: MEWES, Christopher, 24568 Kaltenkirchen (DE)
(74) Vertreter: Raffay & Fleck

(57) **Zusammenfassung**

Es wird ein Stromanschlussstück (1) zum lösbaren elektrischen Verbinden eines Werkstückes mit einer Schweißstromleitung offenbart. Dieses weist ein Verbindungsstück zum lösbaren Verbinden des Stromanschlussstücks (1) mit dem Werkstück und einem Steckkontakt (5) zum lösbaren elektrischen Verbinden des Stromanschlussstücks (1) mit der Schweißstromleitung auf.

Im Gegensatz zu aus dem Stand der Technik bekannten Stromanschlussstücken, bei denen die Verbindungselemente mit den Schweißstromkabeln stets fest verbunden sind, muss bei einem Wechsel des Verbindungselementes bei dem erfindungsgemäßen Stromanschlussstück (1) nicht zusammen mit dem daran angeordneten Kabelabschnitt des Schweißstromkabels ausgewechselt werden. Dadurch wird die Zahl der für das richtige Kontaktieren des Werkstücks bereitzuhaltenden Teile verringert, kann z.B. auch auf Baustellen eine ordnungsgemäße Herstellung einer Schweißstromverbindung mit nur wenigen mitzuführenden Teilen sichergestellt werden.

## Beschreibung

Die vorliegende Erfindung betrifft ein Stromanschlussstück zum lösbaren elektrischen Verbinden eines Werkstücks mit einer Schweißstromleitung.

Für das Elektroschweißen, bei dem zum Abschmelzen eines Schweißdrahtes elektrische Energie zum Einsatz kommt, muss das zu schweißende Werkstück mit Schweißstrom elektrisch kontaktiert werden. Hierzu werden heutzutage Schweißstromklemmen oder vergleichbare Verbindungselemente (Klemmen, Klammern, Bügelverschlüsse, Starkmagnete und dergleichen) verwendet, die fest mit einem Schweißstromkabel verbunden sind. Häufig wird dies mit so genanntem Crimpverbindern umgesetzt, die dann in der Regel mit dem Verbindungselement verschraubt oder verklemmt werden.

Hierbei gibt es eine große Zahl von für die einzelnen Anwendungsfälle angepassten Verbindungselementen, mit denen die Werkstücke kontaktiert und die an den Werkstücken lösbar befestigt werden können. In allen Fällen ist jedoch das Schweißstromkabel mechanisch fest mit dem jeweiligen Verbindungselement verbunden, um darüber auch die elektrische Verbindung herzustellen. Dadurch wird, wenn das Verbindungselement, wie zum Beispiel eine Schweißstromklemme, vom Werkstück gelöst werden muss, um zum Beispiel ein Werkstück zu wechseln oder dasselbe Werkstück an einer anderen Kontaktstelle zu kontaktieren, jedes Mal auch das Schweißstromkabel mitbewegt, insbesondere gebogen oder verdreht bzw. verdrillt. Da derartige Stromanschlussstücke regelmäßig und häufig an Werkstücken angebracht bzw. von diesen gelöst werden, wird die Verbindung zwischen dem Verbindungselemente und dem Schweißstromkabel entsprechend häufig belastet, und es kommt zu Verschleiß. So sind häufig Litzenbrüche in den als Litzenkabel ausgebildeten Schweißleitungen die Folge, was zu einer Reduzierung des Leitungsquerschnitts und damit zu einer Erhöhung des elektrischen Widerstandes an dieser Stelle führt und im Gebrauch durch den Stromfluss hervorgerufene Überhitzungen nach sich ziehen kann mit entsprechender Brandgefahr oder der Gefahr von Verbrennungen für die Bedienperson, die das Verbindungselement setzt, entfernt oder umsetzt.

Auch kommt es dazu, dass infolge der hohen Belastungen dieser Verbindungsstelle dort Kabelisolierungen brechen oder aufreißen, so dass die stromführenden Litzen des Schweißstromkabels freiliegen und damit die Gefahr eines Stromschlages gegeben ist. Beschädigungen im Bereich der festen Verbindung zwischen dem Schweißstromkabel und dem Verbindungselement, wie etwa einer Schweißklemme, treten aber auch deshalb auf, da insbesondere im Bereich von Baustellen, aber auch in stationären Schweißfertigungen, Schweißstromkabel häufig beim Transport über den Boden gezogen oder geschliffen werden, wobei die Verbindungselemente, wie Schweißstromklemmen oder dergleichen, an dort befindlichen Gegenständen hängen bleiben können, so dass Zugkräfte oder Biegemomente auf die Schweißstromkabel und insbesondere deren feste Verbindung zu den Verbindungselementen wirken und dort zu Beschädigungen führen können.

Hier ist häufig zu beobachten, dass entsprechende Beschädigungen und Defekte nur notdürftig geflickt, zum Beispiel mit einer einfachen Schicht eines Isolierbandes umwunden werden. Solchermaßen improvisierte "Reparaturen" beseitigen jedoch in der Regel nicht die bestehende Gefahrenquelle, führen vielmehr dazu, dass diese weiterhin und fortgeführt besteht. Ein Ersatz entsprechend defekter Stromanschlussstücke mit den daran festgelegten Schweißkabeln wird häufig erst viel zu spät durchgeführt; nicht selten werden die Stromanschlussstücke mit den fest angeordneten Schweißkabeln solange verwendet, bis das Schweißkabel abreißt. Dies liegt unter anderem auch daran, dass Reparaturen der entsprechenden Betriebsmittel (Verbindungselement mit angeschlossenem Schweißkabel) nicht nur kostspielig sind, sondern in Fachbetrieben oder Fachwerkstätten durchzuführen sind und einige Tage in Anspruch nehmen können, für die die wertvollen und für den Schweißbetrieb benötigten Betriebsmittel dann nicht zur Verfügung stehen.

Da bei den aus dem Stand der Technik bekannten Stromanschlussstücken die Verbindungselemente mit den Schweißstromkabeln stets fest verbunden sind, ist bei einem Wechsel des Verbindungselementes dieses stets zusammen mit dem daran angeordneten Kabelabschnitt des Schweißstromkabels auszuwechseln. Wenn zum Beispiel im Bereich von Baustellen oder Schweißfertigungen unterschiedliche Werkstücke zu schweißen sind, die mit unterschiedlichen Verbindungselementen, zum Beispiel unterschiedlich geformten Anschlussklemmen, zu kontaktieren sind, müssen entsprechend viele unterschiedliche Stromanschlussstücke mit daran festgelegten Schweißstromkabeln bevorratet werden. Dieses Erfordernis ist nicht immer leicht zu erfüllen, insbesondere auf Baustellen, so dass hier häufig improvisiert wird, indem die Werkstücke mit eigentlich nicht geeigneten Verbindungsstücken kontaktiert werden, was wiederum entweder zu Gefahren für die Bediener oder zu einem nicht sachgerechten Schweißergebnis führen kann.

Hier nun Abhilfe zu schaffen und den oben bezeichneten Nachteilen zu begegnen, die im Stand der Technik auftretenden Gefahren zu vermeiden, ist Aufgabe der vorliegenden Erfindung.

Diese Aufgabe wird erfindungsgemäß gelöst durch ein Stromanschlussstück zum lösbaren elektrischen Verbinden eines Werkstücks mit einer Schweißstromleitung, welches ein Verbindungsstück zum lösbaren Verbinden des Stromanschlussstücks mit dem Werkstück und einen Steckkontakt zum lösbaren elektrischen Verbinden des Stromanschlussstücks mit der Schweißstromleitung aufweist.

Das Neue und Besondere bei dem erfindungsgemäßen Stromanschlussstücks ist nun, dass die Schweißstromleitung, z.B. das Schweißstromkabel, nicht mehr wie bisher fest mit dem Verbindungsstück mechanisch verbunden ist (verschraubt, geklemmt, gequetscht oder dergleichen) sondern das Stromanschlussstücks einen Steckkontakt aufweist, mit dem dieses mit der Schweißstromleitung einfach und schnell elektrisch und mechanisch verbunden werden kann und welches zugleich ein schnelles und einfaches elektrisches wie mechanisches Lösen der Schweißstromleitung von dem Stromanschlussstück erlaubt. Das Stromanschlussstück ist mit anderen Worten ein eigenes und losgelöstes Element, welches keine feste und dauerhafte Verbindung zu einer Schweißstromleitung, wie zum Beispiel einem Schweißstromkabel, aufweist.

Diese besondere und erfindungsgemäße Ausgestaltung führt nun dazu, dass beim Verbinden und beim Lösen des Stromanschlussstücks mit bzw. von einem Werkstück nicht mehr wie im Stand der Technik üblich das Verbindungselement zusammen mit der Schweißstromleitung, zum Beispiel einem Schweißstromkabel, mit dem Werkstück verbunden bzw. von diesem gelöst werden muss. Vielmehr kann zunächst das Stromanschlussstück selbst mit dem Verbindungsstück an dem Werkstück festgelegt werden und kann dann, wenn diese Verbindung geschaffen ist, die Schweißstromleitung über den Steckkontakt elektrisch und mechanisch verbunden werden. Beim Lösen des erfindungsgemäßen Stromanschlussstücks von dem Werkstück erfolgt die Vorgehensweise umgekehrt. Es wird also zunächst die Schweißstromleitung von dem Steckkontakt abgezogen und mechanisch wie elektrisch gelöst, dann kann das Stromanschlussstück durch Lösen des Verbindungsstücks von dem Werkstück abgenommen werden. Bewegungen wie etwa Verdrehungen oder Verbiegungen des Stromanschlussstücks bei den Befestigungs- bzw. Lösevorgängen werden damit nicht mehr auf die Verbindung des Stromanschlussstücks mit der Schweißstromleitung übertragen und können so nicht zu Beschädigungen dieser Verbindung führen. Denn die Schweißstromleitung wird beim Anbringen des Stromanschlussstücks als letztes angeschlossen, also erst dann, wenn das Stromanschlussstück fest mit dem Werkstück verbunden ist, und wird beim Lösen des Stromanschlussstücks als erstes gelöst, so dass auch dort das Ablösen des Stromanschlussstücks vom Werkstück keinerlei Einfluss mehr auf die Schweißstromleitung nimmt.

Gemäß einer vorteilhaften Weiterbildung der Erfindung kann an dem Steckkontakt ein Verriegelungsmittel ausgebildet sein, welches dem mechanischen Verriegeln der Schweißstromleitung mit dem Stromanschlussstück dient. An der Schweißstromleitung kann ein entsprechendes Gegenstück vorgesehen sein, welches mit dem Verriegelungsmittel zusammenwirkt. Eine solche Ausgestaltung erlaubt es, eine mechanisch feste und verriegelte Verbindung zwischen dem Stromanschlussstück und der Schweißstromleitung zu bilden, so dass im Schweißbetrieb nicht etwa die Gefahr besteht, dass sich die Schweißstromleitung von dem Stromanschlussstück löst.

Das Stromanschlussstück kann als Steckkontakt insbesondere einen aus einem leitenden Material gebildeten Aufsteckzapfen aufweisen, der so gestaltet ist, dass er von einer an der Schweißstromleitung ausgebildeten Kontaktbuchse aufgenommen werden kann zum Herstellen einer elektrisch leitenden Verbindung. Der Aufsteckzapfen kann zum Beispiel aus Kupfer oder Messing gebildet sein. Insbesondere kann das gesamte Stromanschlussstück aus einem leitenden Material, z.B. Kupfer oder Messing, bestehen, somit als solches insgesamt den Schweißstrom leiten. In einer wie vorstehend beschriebenen Ausgestaltungsvariante kann der Aufsteckzapfen insbesondere die Form eines Kreiszylinders aufweisen. Er kann aber auch konisch gebildet oder zylinderförmige mit einem von einer Kreisform abweichenden Querschnitt sein.

Wenn, wie in der vorstehend beschriebenen vorteilhaften Weiterbildung vorgesehen, ein Verriegelungsmittel vorgesehen ist, so kann dieses bei einem Aufsteckzapfen als Steckkontakt ein an einer Umfangswandlung des Aufsteckzapfens gebildeter Rastnocken sein. Ist der Aufsteckzapfen im Querschnitt kreisförmig gebildet (zylindrisch oder konisch) kann ein entsprechendes Gegenstück in der Kontaktbuchse gebildet sein, welches von dem Rastnocken durch eine Verdrehung zwischen dem Aufsteckzapfen und der Kontaktbuchse hintergriffen wird, um so die mechanische Verriegelung herzustellen bzw. auszubilden.

Bei dem erfindungsgemäßen Stromanschlussstück kann das Verbindungsstück insbesondere eine Polklemme oder einer Polzwinge umfassen. Diese kann einstückig mit dem Stromanschlussstück insgesamt ausgebildet sein, sie kann aber auch als fest oder lösbar montiertes Anbauteil angebunden sein. So kann zum Beispiel das Stromanschlussstück eine Verbindungsbohrung aufweisen, mit der es zum Beispiel mit einer Polklemme einer Polzwinge oder dergleichen verschraubt werden kann. Auch andere Verbindungsformen mit entsprechenden Verbindungsstücken sind denkbar.

Weitere Vorteile und Merkmale der Erfindung ergeben sich aus der nachfolgenden Beschreibung eines Ausführungsbeispiels anhand der beigefügten Figuren. Dabei zeigen:

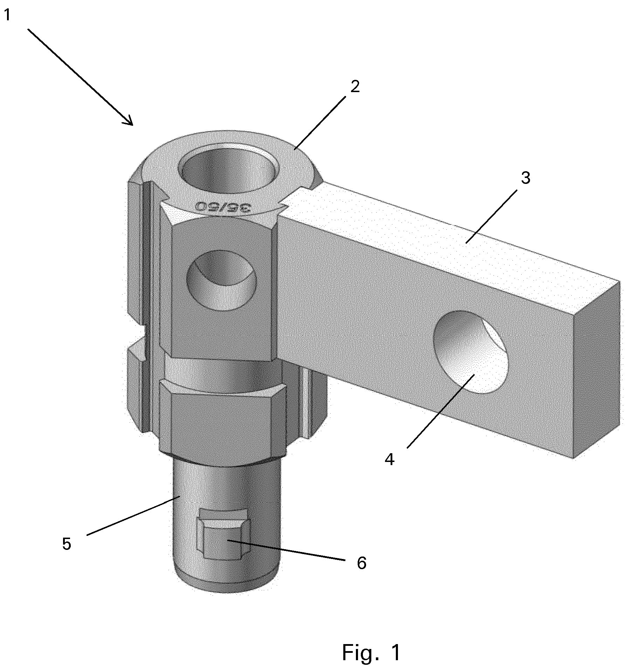

- Fig. 1: eine dreidimensionale Ansicht eines Ausführungsbeispiels eines erfindungsgemäßen Stromanschlussstücks;

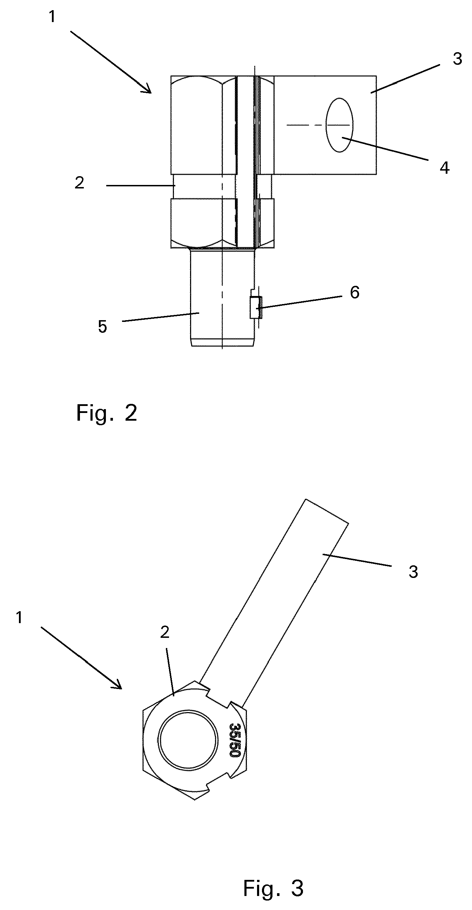

- Fig. 2: eine Seitenansicht des Stromanschlussstücks aus Fig. 1 und
- Fig. 3: eine Aufsicht auf das Stromanschlussstück aus Fig. 1.

In den Figuren ist in drei unterschiedlichen Darstellungen und Ansichten ein Ausführungsbeispiel für ein erfindungsgemäß gestaltetes Stromanschlussstück gezeigt. Die Figuren sind dabei lediglich als Prinzipdarstellungen und keinesfalls als maßstabsgerecht Konstuktionszeichnungen aufzufassen.

In den Figuren ist das Stromanschlussstück mit dem Bezugszeichen 1 bezeichnet und insbesondere ohne ein Verbindungsstück zum lösbaren Verbinden mit einem Werkstück dargestellt. Das Stromanschlussstück 1 hat einen Korpus 2, der insgesamt aus einem leitenden Material, insbesondere einem Metall, insbesondere aus Messing, gebildet ist. Mit dem Korpus 2 fest verbunden, zum Beispiel hartverlötet, ist eine ebenfalls aus einem leitenden Material, insbesondere aus Metall, insbesondere aus Messing gebildete Verbindungslasche 3. Diese Verbindungslasche 3 weist eine durchgehende Öffnung 4, zum Beispiel eine Bohrung, auf, mittels derer sie mit einem hier nicht näher dargestellten Verbindungselement bzw. Verbindungsstück zum lösbaren Verbinden mit einem Werkstück verbunden werden kann, zum Beispiel mit einer Polzwinge oder einer Polklemme oder einem Starkmagneten oder dergleichen, aus dem Stand der Technik bekannten Verbindungsmitteln zum Verbinden mit einem Werkstück.

Das Besondere an dem erfindungsgemäßen Stromanschlussstück 1 besteht nun in dem in diesem Ausführungsbeispiel als Aufsteckzapfen 5 gebildeten Steckkontakt, über den das Stromanschlussstück 1 mit einem Gegenstück, hier mit einer Kontaktbuchse, an einer Schweißstromleitung, beispielsweise einem Schweißstromkabel, auf einfache Weise lösbar mechanisch verbunden und elektrisch kontaktiert werden kann.

An dem Aufsteckzapfen 5 ist an einer Umfangswandung einen Rastnocken 5 gebildet, der im Zusammenspiel mit einer entsprechenden Gegenstruktur in der hier nicht dargestellten Kontaktbuchse an der Schweißstromleitung eine mechanische Verriegelung zwischen dem Aufstecktzapfen 5 und der Kontaktbuchse und somit zwischen dem Stromanschlussstück 1 und der Schweißstromleitung besorgt.

Das in den Figuren gezeigte erfindungsgemäße Ausführungsbeispiel für ein Stromanschlussstück 1 wird mit der Verbindungslasche 3 in vergleichbarer Weise mit einem Verbindungsstück zum Kontaktieren des mit dem Schweißstrom zu beaufschlagenden Werkstücks verbunden, wie dies bisher mit entsprechenden Kabelenden der Schweißstromkabel, zum Beispiel mit einem Crimpaufsatz, geschehen ist. Das Besondere ist hierbei nun die Ausbildung des hier als Aufsteckzapfen 5 gebildeten Steckkontaktes, über den das Stromanschlussstück 1 in einer einfach lösbaren Weise mit der Schweißstromleitung mechanisch verbunden und elektrisch kontaktiert werden kann, diese Verbindung und elektrische Kontaktierung auf ebenso einfache Weise wieder gelöst werden kann. Dies erlaubt ein Anbringen des Stromanschlussstücks 1 an dem Werkstück ohne daran festgelegte Schweißstromleitung, die erst nach dem Festlegen des Stromanschlussstücks 1 an dem Werkstück durch Herstellen der Verbindung über den Aufsteckzapfen 5 kontaktiert und angeschlossen wird. Ebenso kann die Schweißstromleitung vor einem Lösen des Stromanschlussstücks 1 von dem Werkstück abgenommen werden, so dass Bewegungen und Kräfte, die beim Lösen des Stromanschlussstücks 1 von dem Werkstück auftreten, keinen Einfluss auf die Anbindung der Schweißstromleitung an das Stromanschlussstück 1 haben.

### Bezugszeichenliste

- 1: Stromanschlussstück
- 2: Korpus
- 3: Verbindungslasche
- 4: Öffnung
- 5: Aufsteckzapfen
- 6: Rastnocken

## Patentansprüche

1. Stromanschlussstück (1) zum lösbaren elektrischen Verbinden eines Werkstückes mit einer Schweißstromleitung mit einem Verbindungsstück zum lösbaren Verbinden des Stromanschlussstücks (1) mit dem Werkstück und einem Steckkontakt (5) zum lösbaren elektrischen Verbinden des Stromanschlussstücks (1) mit der Schweißstromleitung.

2. Stromanschlussstück (1) nach Anspruch 1, **gekennzeichnet durch** ein an dem Steckkontakt (5) ausgebildetes Verriegelungsmittel (6) zum mechanischen Verriegeln der Schweißstromleitung mit dem Stromanschlussstück (1).

3. Stromanschlussstück (1) nach einem der Ansprüche 1 oder 2, **gekennzeichnet durch** einen aus einem leitenden Material gebildeten Aufsteckzapfen als Steckkontakt (5), wobei der Aufsteckzapfen ausgebildet ist, von einer an der Schweißstromleitung ausgebildeten Kontaktbuchse aufgenommen zu werden zum Herstellen einer elektrisch leitenden Verbindung.

4. Stromanschlussstück (1) nach Anspruch 3, **gekennzeichnet durch** einen kreiszylinderförmigen Aufsteckzapfen.

5. Stromanschlussstück (1) nach einem der Ansprüche 3 oder 4, sofern auf Anspruch 2 rückbezogen, **dadurch gekennzeichnet, dass** das Verriegelungsmittel (6) ein an einer Umfangswandung des Aufsteckzapfens gebildeter Rastnocken ist.

6. Stromanschlussstück (1) nach einem der vorhergehenden Ansprüche, **dadurch gekennzeichnet, dass** das Verbindungsstück eine Polklemme oder eine Polzwinge umfasst.
